# NEUE EUROPÄISCHE PATENTSCHRIFT

(11) **EP 2 076 344 B2**
(45) Veröffentlichungstag und Bekanntmachung des Hinweises auf die Entscheidung über den Einspruch: **29.10.2014**
(45) Hinweis auf die Patenterteilung: 08.12.2010
(21) Anmeldenummer: 07818674.9
(22) Anmeldetag: 04.10.2007
(51) Int. Cl.: B23B 51/02

(54) **Bohrerspitze für ein Bohrwerkzeug**
Drill tip for a drilling tool
Extrémité de perçage pour un outil de perçage

(30) Priorität: 13.10.2006 DE 102006049096; 05.07.2007 DE 102007031440
(43) Veröffentlichungstag der Anmeldung: 08.07.2009
(73) Patentinhaber: KENNAMETAL INC., Latrobe, PA 15650 (US)
(72) Erfinder: BORSCHERT, Bernhard Walter, 96050 Bamberg (DE); KRENZER, Ullrich Ferdinand, 90513 Zirndorf (DE); KAUPER, Herbert Ruldolf, 91058 Erlangen (DE); SCHWAEGERL, Jürgen, 92648 Vohenstrauss (DE)
(74) Vertreter: FDST Patentanwälte
(86) Internationale Anmeldenummer: PCT/EP2007/008595
(87) Internationale Veröffentlichungsnummer: WO 2008/046520

(56) Entgegenhaltungen:
- EP-A- 0 508 468
- EP-A1- 0 278 288
- WO-A-98/42469
- DE-A1- 3 624 617
- DE-A1- 3 628 262
- DE-A1- 4 307 553
- DE-C- 216 607
- FR-A- 725 363
- JP-A- H0 569 213
- JP-A- 59 076 709
- US-A- 867 639
- US-A- 4 400 119
- US-A- 5 622 462
- US-A- 5 678 960

## Beschreibung

Die Erfindung betrifft eine Bohrerspitze für ein Bohrwerkzeug nach dem Oberbegriff des Anspruchs 1. Eine derartige Bohrerspitze ist aus der FR 725 363 A bekannt.

Eine Bohrerspitze ist der DE 44 35 857 A1 zu entnehmen. Die Bohrerspitze wird bei dem bekannten Bohrer in einer stirnseitigen Nut eines Bohrerkörpers eingeklemmt. Die Schneide der Bohrerspitze verläuft in etwa S-förmig von einem Bohrzentrum nach außen zu einem Bohrerumfang. In Bohrerlängsrichtung grenzt an die Schneide eine Spannutwand einer gewendelten Spannut an. Über die Spannut findet der Abtransport des über die Schneide beim Zerspanen abgetragenen Spans statt.

Um einen kontinuierlichen und möglichst störungsfreien Bohrvorgang zu gewährleisten, müssen die Späne zuverlässig und sicher über die Spannut abgeleitet werden. Hierzu muss der Span eine geeignete Form aufweisen. So tritt oftmals das Problem auf, dass bei dem Zerspanungsvorgang Späne geformt werden, die etwa schraubenförmig ausgebildet sind und die teilweise einen größeren Freiraum beanspruchen, als der von der Spannut zur Verfügung gestellte Freiraum. Dies führt unter Umständen dazu, dass die Späne innerhalb der Spannut verklemmen, so dass ein Abtransport nicht mehr sicher gewährleistet ist. Auch besteht die Gefahr, dass Späne zwischen den Bohrerumfang und die Bohrungswand gelangen und sich dort verklemmen, was zu einer Beschädigung der Bohrungswand und zu einer ungenauen Bohriochgeometrie sowie zu einer deutlich erhöhten Beanspruchung des Bohrwerkzeugs führt.

Das Problem der ausreichend sicheren Spanabfuhr besteht insbesondere bei langspanenden Werkstoffen, wie beispielsweise rostfreier Edelstahl, bei denen beim Zerspanungsvorgang sehr lange Späne entstehen.

Zur Vermeidung von übergroßen Spänen ist der Einsatz von so genannten Spanbrechem bekannt. So ist aus der DE 699 27 417 T2 ein plattenförmiger Schneideinsatz für ein Bohrwerkzeug zu entnehmen, bei dem durch Quernuten senkrecht zur Schneide Spanbrecher ausgebildet sind. Die Schneide ist hier also an den Positionen der Spanbrecher unterbrochen.

Der Erfindung liegt die Aufgabe zugrunde, einen sicheren und zuverlässigen Spanabtransport bei guter Bohrqualität zu gewährleisten.

Die Aufgabe wird gemäß der Erfindung gelöst durch eine Bohrerspitze für ein Bohrwerkzeug gemäß dem Anspuch 1. Danach erstreckt sich die Bohrerspitze entlang einer Bohrermittenachse in Bohrerlängsrichtung und weist ein sich von einem auf der Bohrermittenachse liegenden Bohrzentrum nach außen erstreckende Schneide auf. An die Schneide grenzt entgegen einer Drehrichtung des Bohrers eine Freifläche sowie in Bohrerlängsrichtung eine Spannut an. Um einen zuverlässigen und sicheren Spanabtransport zu gewährleisten, ist die Schneide nunmehr in insgesamt drei Schneidabschnitte unterteilt, nämlich in einen vom Bohrerzentrum ausgehenden zentrumsnahen aktiven Schneidabschnitt, einen radial außen liegenden zentrumsfemen aktiven Schneidabschnitt und einen inaktiven Schneidabschnitt, der zwischen den beiden aktiven Schneidabschnitten angeordnet ist. Die Schneidabschnitte liegen alle in der vorderen Stirnfläche der Bohrerspitze und sind daher in Bohrerlängsrichtung zueinander nicht versetzt angeordnet. Weiterhin gehen sie bevorzugt stetig ineinander über. Der zentrumsnahe aktive Schneidabschnitt und der inaktive Schneidabschnitt grenzen hierbei an einem inneren Schneideck aneinander. Das innere Schneideck liegt auf einem Innenkreis, dessen Radius größergleich und bevorzugt etwas größer als ein Kemradius eines Bohrerkems ist. Der Abstand des Schneidecks von der Bohrermittenachse ist daher vorzugsweise geringfügig größer als der Kemradius. Der Bohrerkem ist hierbei durch das im Zentrum zwischen den Spannuten verbleibende Kernmaterial bestimmt, d.h. der Kerndurchmesser ist die kürzeste Verbindung zwischen den Spannuten.

Durch diese Ausgestaltung ist der inaktive Schneidabschnitt in radialer Richtung etwas zurückversetzt zu dem inneren Schneideck angeordnet. In radialer Richtung übersteht das innere Schneideck des zentrumsnahen aktiven Schneidabschnitts den inaktiven Schneidabschnitt, so dass dieser keine Zerspanungsarbeit aufbringt. Die Zerspanungsarbeit wird erst wieder vom zentrumsfemen Schneidabschnitt übernommen. Durch diese spezielle Ausgestaltung ist daher bei einer durchgehenden, lediglich in unterschiedliche Abschnitte unterteilten Schneide eine Aufteilung des erzeugten Spans in zwei kleinere Spanteile erreicht, so dass eine zuverlässige und problemlose Spanabfuhr über die Spannut ermöglicht ist. Die Schneide verläuft daher insgesamt an der Stimfläche der beispielsweise kegelförmigen Bohrerspitze ohne axialen Versatz, wobei der inaktive Schneidabschnitt die beiden aktiven Schneidabschnitte miteinander verbindet. Unter "kleineren Spanteilen" wird hierbei verstanden, dass die durch die Länge der Schneide definierte Breite des Spans verkleinert ist. Der Span ist daher in radialer Richtung von Beginn an geteilt. In axialer Richtung werden die einzelnen Spanteile bevorzugt nicht gebrochen, es bilden sich also langspanige Teilspäne aus. Entscheidend ist daher, dass durch die Schneidengeomtrie direkt an der Schneide zwei Teilspäne gebildet werden.

Die inaktive Schneide weist einen gekrümmten Verlauf auf. Durch den gekrümmten Verlauf ist daher eine Hohlkehle ausgebildet zwischen dem inneren Schneideck und einem Anfangspunkt des zentrumsfemen Schneidabschnitts. Innerhalb dieser Hohlkehle erfolgt kein Eingriff mit dem Werkstück.

Für eine möglichst gleichmäßige Spanformung und ein einfaches Herstellen der Schneidengeometrie gehen der inaktive Schneidabschnitt und der zentrumsferne aktive Schneidabschnitt knickfrei ineinander über. Die beiden Schneidabschnitte weisen daher einen homogen ineinander übergehenden Verlauf auf.

Die Bohrerspitze ist hierbei insbesondere als austauschbar befestigbare Bohrerspitze ausgebildet, die klemmend und/oder mit Hilfe von Befestigungselementen an einem Bohrerkörper befestigbar ist. Alternativ ist die Bohrerspitze mit dem Bohrerkörper fest; beispielsweise durch Löten, verbunden. Schließlich besteht auch die Möglichkeit, dass die Bohrerspitze einstückiges Teil des Bohrerkörpers ist. Für den Spanabtransport ist die Spitzengeometrie des Bohrwerkzeuges von entscheidender Bedeutung.

Die Bohrerspitze ist insbesondere durch einen so genannten Schraubenflächenanschliff oder alternativ durch einen Kegelmantelschliff ausgebildet. Insgesamt ist die Bohrerspitze in etwa kegelförmig. Eine sich entgegen der Drehrichtung an die Schneide anschließende Hauptfreifläche weist beispielsweise einen konstanten Freiwinkel auf. Alternativ hierzu ist die Freifläche in mehrere Teilabschnitte mit unterschiedlichen Freiwinkeln unterteilt und die Hauptfreifläche weist beispielsweise einen geknickten Verlauf auf.

Vorzugsweise schließen der zentrumsnahe aktive Schneidabschnitt und der inaktive Schneidabschnitt zwischen sich einen Winkel etwa ≤ 90° ein. Hierdurch wird sichergestellt, dass der inaktive Schneidabschnitt radial etwas zurückversetzt ist oder maximal auf gleicher radialer Höhe wie das innere Schneideck liegt. Der Winkel liegt vorzugsweise bei etwa 80° im Bereich 85° - 65°. Die Wahl des Winkels ist allgemein abhängig vom zum zerspanenden Werkstoff, für den der Bohrer ausgelegt ist. Bei weichen Materialien, wie beispielsweise Leichtmetallen wie Aluminium, kann auch ein vergleichsweise spitzer Winkel gewählt werden. Der minimale Winkel liegt für diese weichen Materialien bei 20°.

An den zentrumsfernen aktiven Schneidabschnitt schliebt sich ein Wandabschnitt einer Spannut an, der - in einem Querschnitt senkrecht zur Bohrerlängsachse gesehen - entlang einer Kreisbogenlinie eines Kreises mit einem Spanformradius verläuft. Da der zentrumsfeme aktive Schneidabschnitt die stirnseitige Begrenzungskante der Spannut bildet, weist daher der zentrumsfeme aktive Schneidabschnitt einen zum Spanformradius korrelierten gekrümmten Verlauf auf. Durch den gekrümmten Verlauf wird eine geeignete Spanformung erzielt, wobei der Radius des Spanes durch den Spanformradius bestimmt ist. Neben der Aufteilung des Spans wird daher durch diese Ausgestaltung zugleich auch eine definierte Spanformung erzielt, so dass ein relativ kleiner Span sowohl in geeigneter Größe als auch in einer geeigneten Form ausgebildet wird. Durch die gezielte Aufteilung des Spans in mehrere, insbesondere zwei Spanteile und der definierten Spanformung ist ein besonders sicheres Abtransportieren des Spans über die Spannut gewährleistet.

Zweckdienlicherweise ist der Spanformradius hierbei derart bemessen, dass der durch den Spanformradius definierte Kreis in einer Ebene senkrecht zur Bohrermittenachse innerhalb eines Freiraums liegt, der definiert ist durch den Verlauf der Schneide und eine Bohrerumfangslinie. Der Spanformradius ist hierbei bevorzugt derart bemessen, dass der Kreis möglichst genau innerhalb des Freiraums liegt, dass er also lediglich etwas kleiner ist als der Freiraum. Hierdurch wird gewährleistet, dass der geformte Span frei und ohne Klemmung innerhalb der Spannut abtransportiert werden kann.

Die beiden Schneidabschnitte weisen dabei insgesamt einen sichelförmigen Verlauf auf. Unter einem sichelförmigen Verlauf wird hierbei verstanden, dass der zentrumsfeme aktive Schneidabschnitt unter einem spitzen Winkel bezüglich des Bohrerumfangs ausläuft. Durch diese sichelförmige Ausgestaltung wird an dem äußeren Schneideck eine Art Keil ausgebildet, welcher sicher und zuverlässig dafür sorgt, dass der Span von der Bohrungswand zur Bohrerachse geführt wird. Damit ist sicher vermieden, dass der Span sich zwischen der Bohrungswand und einem Bohrerrücken des Bohrerkörpers einklemmt.

Gemäß einer bevorzugten Ausgestaltung ist - im Schnitt senkrecht zur Bohrerlängsachse gesehen - zwischen einer Radialen und einer durch die Nebenschneide verlaufenden Tangente der Spannutwand ein Nebenspanwinkel gebildet. Der Nebenspanwinkel weist einen Wert von >20° auf und liegt insbesondere in einem Bereich zwischen 20° und 30°.

In einer zweckdienlichen Weiterbildung ist der zentrumsnahe aktive Schneidabschnitt spitzwinklig zur Spannut orientiert und die beiden weiteren Schneidabschnitte verlaufen entlang der Spannut, bilden daher die Begrenzungskante der Spannut.

Vorzugsweise weist das innere Schneideck zur Bohrermittenachse einen Abstand auf, der etwa dem Kemradius des Bohrerkems entspricht. Der zentrumsnahe aktive Schneidabschnitt überdeckt daher den Bohrerkem. Hierdurch wird eine besonders geeignete Aufteilung der beiden aktiven Schneidabschnitte erreicht.

Um einen sicheren Spanabtransport über die Spannut zu erzielen, teilt sich gemäß einer zweckdienlichen Ausgestaltung die gesamte aktive Schneidenlänge der beiden aktiven Schneidabschnitte zu etwa 2/3 auf den zentrumsfemen und zu etwa 1/3 auf den zentrumsnahen Schneidabschnitt auf. Durch diese Aufteilung wird die Zerspanungsleistung zum größten Teil durch den zentrumsfernen aktiven Schneidabschnitt ausgeübt. Das bei der Zerspanung abgetragene Zerspanungsvolumen wird hierbei etwa mehr als 80 % durch den zentrumsfemen aktiven Schneidabschnitt abgetragen.

Gemäß einer bevorzugten Weiterbildung ist dem aktiven Schneidabschnitt eine innere Teilspannut und dem äußeren aktiven Schneidabschnitt eine äußere Teilspannut zur getrennten Spanabfuhr der von den aktiven Schneidabschnitten erzeugten Späne zugeordnet. Die beiden Teilspannuten sind hierbei voneinander getrennt und zwar insbesondere durch einen Trennsteg, welcher am inneren Schneideck beginnt und vorzugsweise wendelartig in Bohrerlängsrichtung verläuft.

Diese Weiterbildung hat den besonderen Vorteil, dass die beiden beim Zerspanungsvorgang erzeugten Teilspäne, nämlich ein innerer von dem inneren aktiven Schneidabschnitt erzeugter innerer Teilspan und ein äußerer, vom äußeren aktiven Schneidabschnitt erzeugter äußerer Teilspan, getrennt abgeführt werden. Damit ist gewährleistet, dass die beiden Teilspäne nicht ineinander laufen und sich beispielsweise verhaken und evtl. einen Spanstau verursachen. Durch die beiden Teilspannuten wird daher jeder Teilspan separat geformt und getrennt vom anderen Span geführt. Aufgrund des größeren Zerspanungsvolumens des äußeren aktiven Schneidabschnitts bildet sich insbesondere bei der Zerspanung von austenitischen rostfreien Stählen üblicherweise ein sehr langer, wendelförmig verlaufender Teilspan aus. Demgegenüber bilden sich bei dem inneren aktiven Schneidabschnitt vergleichsweise kurze Teilspäne aus. Bei Verzicht auf zwei getrennte Teilspannuten würde der kurzspanige innere Teilspan in den langspanigen äußeren Teilspan hineinlaufen, so dass die Gefahr besteht, dass sich ein Spanknäuel ausbildet, welches problematisch zum Abführen ist. Insgesamt wird daher durch die beiden getrennten Teilspannuten eine sichere und zuverlässige Spanabfuhr der Teilspäne erzielt.

Vorzugsweise ist hierbei ein innerer Kemradius, gebildet durch den radialen Abstand zwischen der Bohrermittenachse und der inneren Teilspannut, geringer als ein äußerer Kemradius, der wiederum gebildet ist durch den radialen Abstand zwischen der Bohrermittenachse und der äußeren Teilspannut. Der Nutgrund der inneren Teilspannut ist daher näher zu der Bohrermittenachse orientiert.

Im Sinne einer zuverlässigen Spanabfuhr sind daher die Teilspannuten allgemein unterschiedlich ausgebildet. Für eine weitere Verbesserung der Spanabfuhr verändern sich vorzugsweise die Kemradien in Bohrerlängsrichtung unterschiedlich. Durch die unterschiedliche Änderung der Teilspannuten in Bohrerlängsrichtung wird die Spantransportrichtung in Längsrichtung definiert derart beeinflusst, dass gewährleistet ist, dass die beiden Teilspäne nicht ineinander verlaufen, sondern vielmehr nebeneinander ausgebildet werden und auch nebeneinander im weiteren Verlauf abtransportiert werden.

Zweckdienlicherweise ist hierbei vorgesehen, dass der äußere Kemradius in Bohrer längsrichtung abnimmt. Durch die Abnahme des äußeren Kemradius wird die Tiefe der Spannut vergrößert, so dass mit zunehmender Entfernung vom Schneidbereich der freie Raum für den äußeren Teilspan größer wird. Vorzugsweise ist ergänzend vorgesehen, dass der innere Kemradius in Bohrerlängsrichtung zumindest konstant bleibt oder zunimmt. Insgesamt werden durch diese Maßnahmen die beiden Teilspäne in Bohrerlängsrichtung unterschiedlich geführt, so dass ein Verklemmen der Teilspäne untereinander ausgeschlossen ist.

Für ein zuverlässiges Nebeneinanderlaufen der beiden Teilspäne ist zweckdienlicherweise weiterhin vorgesehen, dass die beiden Teilspannuten unterschiedliche Drallwinkel aufweisen, wobei insbesondere die äußere Teilspannut einen größeren Drallwinkel aufweist als die innere Teilspannut. Unter Drallwinkel wird hier allgemein die Orientierung der jeweiligen Teilspannut bezogen auf die Bohrerlängsrichtung verstanden.

Vorzugsweise weist die innere Teilspannut einen geringeren Spanformradius auf als die äußere Teilspannut. Der Spanformradius ist maßgebend für die Formung und damit für den Durchmesser des üblicherweise wendelförmigen Spans. Daher wird durch diese Maßnahme sichergestellt, dass der innere Teilspan im Vergleich zum äußeren Teilspan einen in der Regel deutlich kleineren Durchmesser aufweist, so dass sich die beiden Teilspäne auch in ihren Durchmessern unterscheiden.

Zweckdienlicherweise unterscheiden sich die beiden Teilspannuten auch im Hinblick auf die Nebenspanwinkel, die jeweils zwischen einer Spannutwand und einer Radialen durch die Bohrermittenachse gebildet ist. Im Falle der inneren Teilspannut verläuft die entsprechende Radiale durch das innere Schneideck und bildet einen inneren Nebenspanwinkel aus. Im Falle der äußeren Teilspannut verläuft die Radiale durch das äußere Schneideck und bildet mit der Spannutwand einen äußeren Nebenspanwinkel aus. Die beiden Nebenspanwinkel unterscheiden sich hierbei, wobei der innere Nebenspanwinkel zweckdienlicherweise betragsmäßig kleiner ist als der äußere Nebenspanwinkel. Insgesamt weist der äußere Nebenspanwinkel aufgrund der sichelartigen Ausgestaltung einen vergleichsweise großen Wert im Bereich von 20° - 30° auf. Der innere Nebenspanwinkel ist demgegenüber betragsmäßig deutlich kleiner, und ist beispielsweise lediglich halb so groß. Zweckdienlicherweise ist zusätzlich vorgesehen, dass der äußere Nebenspanwinkel als ein spitzer, so genannter positiver Nebenspanwinkel ausgebildet ist, wobei der innere Nebenspanwinkel ein stumpfer, so genannter negativer Nebenspanwinkel ist.

Weiterhin ist ergänzend vorgesehen, dass sich der äußere Nebenspanwinkel in Bohrer längsrichtung verändert und insbesondere betragsmäßig kleiner wird.

In einer bevorzugten Ausgestaltung laufen die beiden Teilspannuten in einer gemeinsamen Spannut zusammen. Das Zusammenlaufen erfolgt hierbei beabstandet von den Schneidabschnitten, wenn die Späne bereits ausreichend geformt und nebeneinander verlaufend vorliegen. Sobald nämlich die geformten Teilspäne nebeneinander getrennt vorliegen, können diese problemlos in einer gemeinsamen Spannut abtransportiert werden. Damit sind die konstruktiven Maßnahmen lediglich auf den Bereich der Bohrerspitze beschränkt und es ist nicht erforderlich, die beiden Teilspannuten über die gesamte Länge des Bohrers auszubilden. Bei einem modularen Bohrwerkzeug, bei dem eine Bohrerspitze in einen Bohrerkörper eingesetzt wird, sind die beiden Teilspannuten vorzugsweise lediglich in der Bohrerspitze ausgebildet. Die beiden Teilspannuten der Bohrerspitze münden dann in eine gemeinsame Spannut des Bohrerkörpers. Aufgrund der gezielten Abführung auch des inneren Teilspans ist bei dieser Ausführungsvariante mit den beiden Teilspannuten im Vergleich zu einer Ausführungsvariante ohne Teilspannuten eine Erhöhung des Zerspanungsvolumens des inneren aktiven Schneidabschnitts vorgesehen. Bei der Ausführungsvariante mit den beiden Teilspannuten ist daher vorzugsweise die aktive radiale Länge des inneren aktiven Schneidabschnitts größer gleich etwa 50% der gesamten aktiven radialen Schneidenlänge. Die radiale Länge des inneren aktiven Schneidabschnitts beträgt hierbei vorzugsweise bis zu 2/3 der gesamten aktiven radialen Schneidenlänge. Die radiale Länge des inneren aktiven Schneidabschnitts ist hierbei definiert durch den Radius eines Innenkreises, auf dem das innere Schneideck liegt. Die gesamte aktive radiale Schneidenlänge ist definiert durch den Bohrerradius. Bei der Ausführungsvariante mit den beiden Teilspannuten beträgt daher das Verhältnis dieser beiden Radien etwa 1/2 - 2/3.

Ausführungsbeispiele der Erfindung werden im Folgenden anhand der Zeichnung näher erläutert. Es zeigen jeweils in schematischen und vereinfachten Darstellungen:
- Fig. 1: eine Aufsicht auf eine Bohrerspitze gemäß einer ersten Ausführungsva- riante,
- Fig. 2: eine Seitenansicht eines Bohrers,
- Fig. 3A: eine Seitendarstellung einer Bohrerspitze gemäß einer zweiten Ausfüh- rungsvariante,
- Fig. 3B: eine Aufsicht auf eine Übereinanderlagerung von mehreren Schnitten durch die Bohrerspitze gemäß Fig. 3A entsprechend den in Fig. 3A ange- deuteten Schnittebenen,
- Fig. 4: eine Aufsicht auf die Bohrerspitze gemäß Fig. 3A,
- Fig. 5: eine weitere Schnittdarstellung durch die Bohrerspitze gemäß Fig. 3A et- wa im Bereich der Schnittebene A-A, sowie
- Fig. 6: eine ausschnittsweise Seitenansicht eines Spiralbohrers mit der Bohrers- pitze gemäß Fig. 3A.

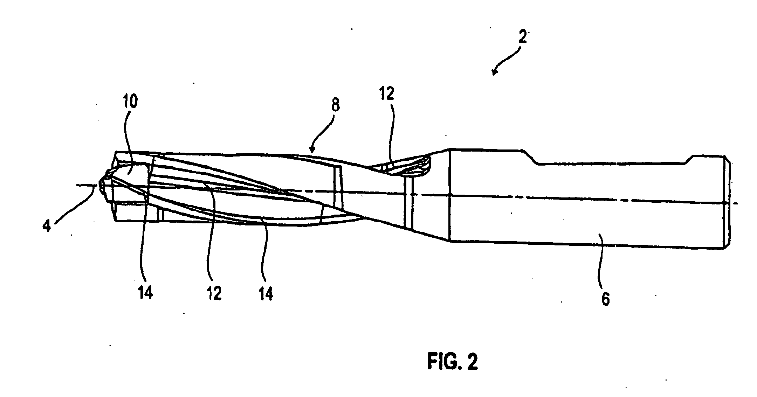

In den Figuren sind gleich wirkende Teile mit den gleichen Bezugszeichen versehen. Wie aus Fig. 2 zu entnehmen ist, erstreckt sich der darin dargestellte Spiralbohrer 2 in Längsrichtung entlang einer Bohrermittenachse 4. Er weist an seinem rückwärtigen Ende einen Schaftabschnitt 6 auf, mit dem er in eine geeignete Bearbeitungsmaschine eingespannt wird. An den Schaftabschnitt 6 schließt sich ein Bohrerkörper 8 an, der stimendseitig eine Bohrerspitze 10 aufweist. Der dargestellte Spiralbohrer 2 umfasst zwei wendelförmig verlaufende Spannuten 12, die sich bis in die Bohrerspitze 10 hinein erstrecken. Durch den gesamten Spiralbohrer 2 sind üblicherweise Kühlmittelbohrungen geführt, die stimendseitig oder spitzennah an der Bohrerspitze 10 austreten. Entlang der Spannut 12 verläuft in Bohrerlängsrichtung jeweils eine Nebenschneide 14, die daher ebenfalls wendelförmig verlaufend ausgebildet ist.

Die Bohrerspitze 10 ist im Ausführungsbeispiel als ein austauschbares, separates Teil ausgebildet, welches klemmend im Bohrerkörper 8 befestigt ist. Bei dem in Fig. 2 dargestellten Spiralbohrer 2 handelt es sich daher um ein modulares Bohrwerkzeug. Prinzipiell kann auch eine fest mit dem Bohrerkörper 8 verbundene Bohrerspitze 10 vorgesehen sein, die beispielsweise durch Löten mit dem Bohrerkörper 8 verbunden ist. Weiterhin besteht auch die Möglichkeit, als Spiralbohrer 2 einen so genannten Vollhartmetallbohrer vorzusehen, bei dem die Bohrerspitze ein einstückiges Bestandteil des Bohrerkörpers 8 ist.

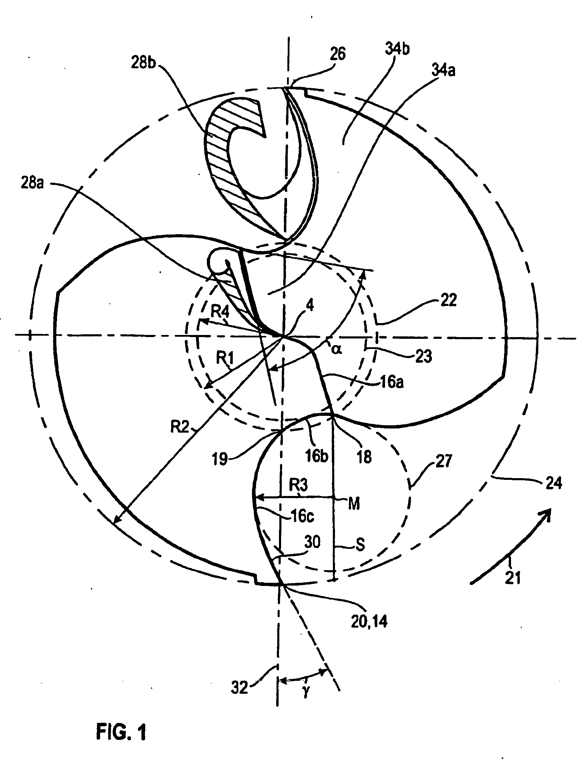

Die spezielle Schneidengeometrie der Bohrerspitze 10 ist aus der Aufsicht gemäß Fig. 1 zu entnehmen. Demnach sind im Ausführungsbeispiel ausgehend von dem auf der Bohrermittenachse 4 liegenden Bohrerzentrum jeweils zwei sich nach außen erstreckende Schneidbereiche vorgesehen, die jeweils drei Schneidabschnitte 16a,b,c aufweisen. Alle Schneidabschnitte verlaufen an der im Ausführungsbeispiel kegelmantelförmigen Stirnfläche ohne Versatz entlang. Prinzipiell können auch mehr als zwei, beispielsweise drei Schneidbereiche mit jeweils drei Schneidabschnitten 16a-c vorgesehen sein. Die Bohrerspitze 10 ist rotationssymmetrisch bezüglich der Bohrermittenachse 4 ausgebildet. Bei der dargestellten Ausführungsvariante ist die Bohrerspitze 10 um 180° rotationssymmetrisch. Der erste Schneidabschnitt 16a bildet einen aktiven, zentrumsnahen Schneidabschnitt und erstreckt sich von der Bohrermittenachse 4 etwa in grob radialer Richtung bis zu einem inneren Schneideck 18. Im Ausführungsbeispiel bilden die beiden aktiven zentrumsnahen Schneidabschnitte 16a eine etwa S-förmig verlaufende Teilschneide, die im Bereich der Bohrermittenachse 4 eine geradlinig verlaufende Querschneide umfasst. Am inneren Schneideck 18 schließt sich ein inaktiver Schneidabschnitt 16b an, welcher an einem Anfangspunkt 19 stetig und kantenfrei in einen zentrumsfernen aktiven Schneidabschnitt 16c übergeht. Der zentrumsferne aktive Schneidabschnitt 16c erstreckt sich bis zu einem äußeren Schneideck 20.

Beim Einsatz rotiert der Spiralbohrer 2 um die Bohrermittenachse 4 in Drehrichtung 21. Hierbei definiert das innere Schneideck 18 einen in Fig. 1 gestrichelt dargestellten Innenkreis 22 mit einen Innenkreisradius R1 und das äußere Schneideck 20 definiert einen in Fig. 1 strichpunktiert dargestellten Außenkreis 24 mit einem Außenkreisradius R2. Der Außenkreisradius R2 entspricht hierbei dem Bohrer-Nennradius und definiert den Bohrerumfang. Am äußeren Schneideck 20 schließt sich in Längsrichtung die Nebenschneide 14 an. Im Bereich der Nebenschneide 14 ist am äußeren Schneideck 20 eine Fase 26 vorgesehen, mit der sich der Spiralbohrer 2 an einer Bohrungswand abstützt.

Von besonderer Bedeutung ist nunmehr, dass das innere Schneideck 18 in radialer Richtung betrachtet etwas weiter außen liegt als der inaktive Schneidabschnitt 16b. Da der inaktive Schneidabschnitt 16b zugleich den zentrumsnächsten Punkt der Spannut 12 aufweist, ist der Abstand des Schneidecks 18 und damit der Radius R1 des Innenkreises 22 etwas größter als ein Kemradius R4 eines Bohrerkems 23, der durch eine gestrichelte Linie angedeutet ist. Der Bohrerkern 23 ist hierbei durch das im Zentrum zwischen den Spannuten 2 verbleibende Kernmaterial bestimmt. Der Kemradius R4 ist demnach definiert durch den kürzesten hälftigen Abstand zwischen den beiden Spannuten 12. Durch diese Ausgestaltung ist der mittlere Schneidabschnitt 16b in radialer Richtung etwas gegenüber dem inneren Schneideck 18 zurück versetzt, so dass der mittlere Schneidabschnitt 16b an der Zerspanungsarbeit nicht teilnimmt. Der erste Punkt, welcher wieder bei der Zerspanungsarbeit teilnimmt, ist der Anfangspunkt 19 des zentrumsfemen Schneidabschnitts 16c. Zwischen dem zentrumsnahen aktiven Schneidabschnitt 16a und dem mittleren inaktiven Schneidabschnitt 16b ist ein Schneidenwinkel α ausgebildet ist, der etwa im Bereich von 90° liegt und bevorzugt etwas keiner als 90° ist. Der Schneidenwinkel α ist hierbei definiert durch den Winkel zwischen den durch das innere Schneideck 18 laufenden Tangenten der beiden Schneidabschnitte 16a,b, insbesondere durch den Winkel zwischen den Projektionen der beiden Tangenten auf eine Ebene orthogonal zur Bohrermittenachse.

Es sind also pro Bohrerhälfte zwei räumlich voneinander getrennte Schneidabschnitte 16a,c ausgebildet, welche die Zerspanungsleistung ausführen. Hierdurch entstehen auch zwei getrennte Spanteile 28a,b. Die spezielle Geometrie der Schneide mit den drei Schneidabschnitten 16a-c und dem mittleren inaktiven Schneidabschnitt 16b wirkt daher nach Art eines Spanteilers bei gleichzeitig durchgängigem Verlauf der Schneide.

Die gesamte in radialer Richtung wirksame Schneidenlänge teilt sich im ersten Ausführungsbeispiel gemäß Fig. 1 auf die beiden Schneidabschnitte 16a,c auf, und zwar insbesondere zu etwa 2/3 auf den zentrumsfemen aktiven Schneidabschnitt 16c und zu etwa 1/3 auf den zentrumsnahen aktiven Schneidabschnitt 16a. Unter in radialer Richtung wirksamer Schneidenlänge ist hierbei die radiale Länge des jeweiligen Schneidabschnitts 16a,c in radialer Richtung zu verstehen. Die radial wirksame Schneidenlänge des zentrumsnahen Schneidabschnitts 16a entspricht daher dem Innenkreisradius R1 und die radial wirksame Schneidenlänge des zentrumsfernen Schneidabschnitts 16c entspricht der Differenz zwischen dem Außenkreisradius R2 und dem Innenkreisradius R1. Der Innenkreisradius R1 liegt allgemein in einem Bereich zwischen etwa 20% bis 40% des Außenkreisradiusses R2. Der Innenkreisradius R1 ist hierbei etwas größer als der Kemradius R4. Insbesondere bei Bohrern 2, bei denen der Kemradius mehr als 30% des Außenkreisradius aufweist, entspricht der Innenkreisradius R1 nahezu dem Kemradius R4 des Bohrerkems 23.

Für den angestrebten sicheren Spanabtransport ist neben der Aufteilung des Spans in die beiden Spanteile 28a,b auch eine definierte Spanformung von besonderer Bedeutung. Um diese zu erreichen, ist zunächst vorgesehen, dass die beiden Schneidenabschnitte 16b,c homogen und kantenfrei entlang einer gekrümmten Linie ineinander übergehen. Die beiden Schneidabschnitte 16b,c sind hierbei derart gekrümmt, dass eine die Spannut 12 begrenzende Spannutwand 30, die sich an diese Schneidenabschnitte 16b,c anschließt, entlang einer Kreisbogenlinie mit einem Spanformradius R3 verläuft. Der Spanformradius R3 liegt innerhalb einer Ebene orthogonal zur Bohrermittenachse und bildet einen in dieser Ebene liegenden gedachten Spankreis 27 mit Mittelpunkt M. Der Spanformradius R3 bestimmt den Spanradius des sich beim Zerspanungsvorgang ausbildenden Spanteils 28b. Der Spanformradius R3 ist derart bemessen, dass der gebildete Spanteil 28b kleiner oder maximal gleich groß ist wie der durch die Spannut 12 geschaffene Freiraum zu der Bohrungswand, deren Verlauf dem in der Fig. 1 durch die strichpunktierte Linie dargestellten Außenkreis 24 entspricht. Der Spanformradius R3 ist daher geringfügig kleiner oder gleich der Hälfte einer Strecke s, die am inneren Schneideck 18 beginnt, durch den Mittelpunkt M des Spankreises 27 verläuft und an dem Außenkreis 24 endet.

Aufgrund der speziellen Geometrie der Schneidabschnitte 16b,c mit dem gekrümmt verlaufenden Abschnitt der Spannutwand 30 ist insgesamt eine sichelartige Ausgestaltung der Schneidabschnitte 16b,c erreicht. Insgesamt ist durch diesen sichelartigen Verlauf zwischen einer Radialen 32, die durch das äußere Schneideck 20 verläuft, und der Spannnutwand 30 bzw. dem Schneidabschnitt 16c eine Hohlkehle ausgebildet. Der zentrumsfeme Schneidabschnitt 16c läuft keilartig und spitz zu dem Außenkreis 24 hin aus. In einer Ebene senkrecht zur Bohrermittenachse 4 gesehen ist zwischen der Radialen 32 und der Tangente der Spannutwand 30 am äußeren Schneideck 20 ein Nebenspanwinkel γ gebildet, welcher bevorzugt größer als 20° ist. Durch diese sichelförmige Ausgestaltung wird der entstehende Spanteil 28b sicher von der Bohrungswand weggeführt, so dass ein Verklemmen zwischen der Fase 26 und der Bohrungswand zuverlässig vermieden ist.

Die Bohrerspitze 10 wird vorzugsweise durch einen Schleifvorgang ausgebildet. Hierbei wird bevorzugt ein an sich bekannter Schraubenflächenanschliff oder alternativ ein ebenfalls an sich bekannter Kegelanschliff ausgeführt. Die Bohrerspitze 10 ist insgesamt kegelartig ausgebildet. Die einzelnen Schneidabschnitte 16a-c liegen daher nicht in einer gemeinsamen Orthogonalebene sonder weisen auch eine Komponente in Richtung der Längsachse auf. An die Schneidabschnitte 16a,c schließen sich entgegen der Drehrichtung 21 jeweils Hauptfreiflächenbereiche 34 a,b an. Diese schließen jeweils zu den Schneidabschnitten 16a,c einen Freiwinkel ein, der definiert ist als Winkel zwischen einer Orthogonalebene zur Bohrermittenachse 4 und einer senkrecht zum jeweiligen Schneidabschnitte 16a,c verlaufenden Tangente des jeweiligen Hauptfreiflächenbereichs 34 a,b. Je nach gewählter Anschliffahrt und Ausgestaltung weisen die Hauptfreiflächenbereiche 34a,b gleiche oder unterschiedliche Freiwinkel auf. Bei unterschiedlichen Freiwinkeln gehen die einzelnen Hauptfreiflächenbereiche 34a,b vorzugsweise stetig und insbesondere auch kantenfrei ineinander über.

Die beiden bezüglich der Bohrermittenachse 4 gegenüberliegenden zentrumsnahen Schneidabschnitte 16a bilden über das Bohrzentrum hinweg einen in etwa S-förmigen Schneidenbereich mit der so genannten Querschneide aus. In einer bevorzugten Ausgestaltung liegen die Schneidabschnitte 16a auf einer zum Hauptfreiflächenbereich 34a steil abfallenden gebirgskammartigen Erhebung. Hier ist daher ein vergleichsweise großer Freiwinkel im Bereich von 10° bis 30 ° ausgebildet, wohingegen der Freiwinkel des Hauptfreiflächenbereichs 34b deutlich geringer ist und im Bereich von 6° bis 12° liegt.

Insgesamt ist durch die gewählte Schneidengeometrie ein sicherer und zuverlässiger Spanabtransport auch bei schwierigen Materialien, wie beispielsweise langspanenden rostfreien Edelstählen, erreicht. Dies wird durch die gezielte Spanbrechung in zwei Spanteile 28a,b sowie ergänzend hierzu durch die definierte Spanformung insbesondere des Spanteils 28b erzielt.

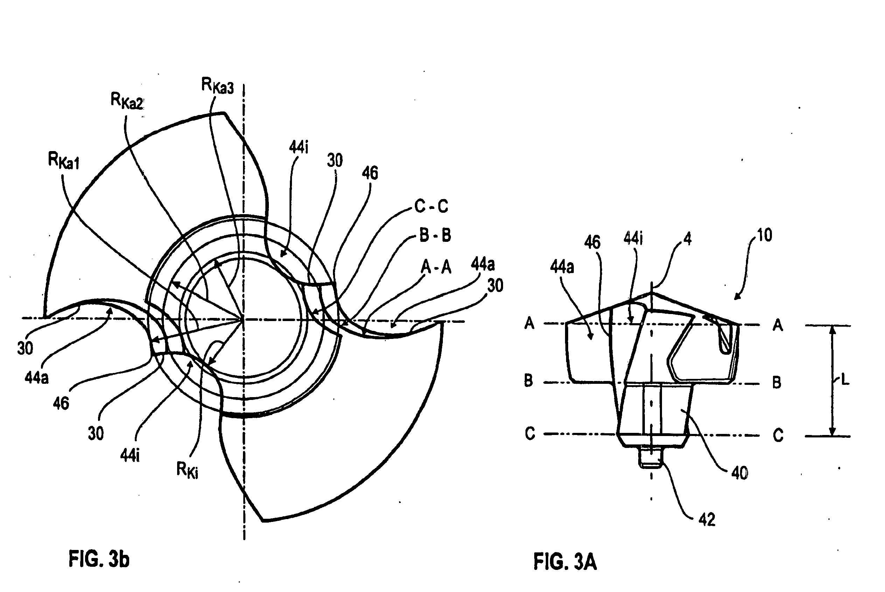

Die zu den Fig. 3 bis 6 nachfolgend beschriebene Ausführungsvariante unterscheidet sich zu der zu den Fig. 1 und 2 beschriebenen Ausführungsvariante im Wesentlichen durch eine verbesserte Spanabfuhr bei im Wesentlichen unveränderter Ausgestaltung der Schneide mit den unterschiedlichen Schneidabschnitten 16a-c. Die Ausführungen zu den Fig. 1 und 2 im Hinblick auf die Ausbildung der einzelnen Schneidabschnitte 16a-c gelten daher gleichermaßen auch für die Ausführungsvariante gemäß den Fig. 3 bis 6.

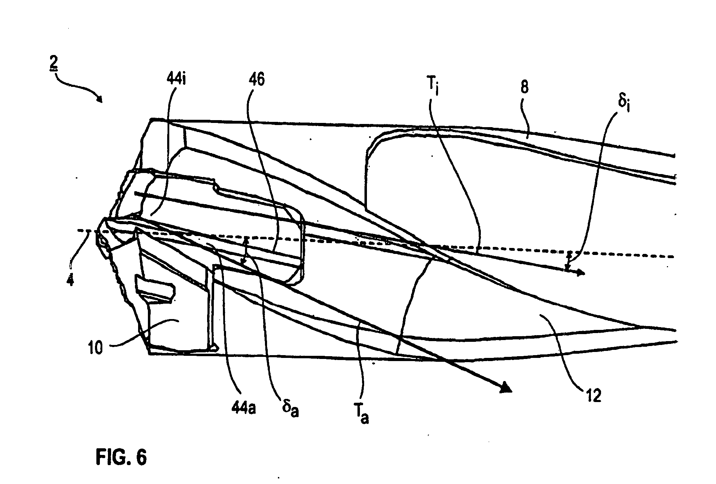

Die Bohrerspitze 10 gemäß Fig. 3A ist als eine austauschbare Bohrerspitze 10 zur Befestigung im Bohrerkörper 8 vorgesehen, wie er in Fig. 6 dargestellt ist. Die Bohrerspitze 10 wird hierbei zweckdienlicherweise klemmend befestigt. Sie weist eine kegelmantelähnliche Stimfläche auf, an der die einzelnen Schneidabschnitte 16a-c wie zu Fig. 1 beschrieben verlaufen. Am der Stirnseite gegenüberliegenden Ende der Bohrerspitze 10 ist ein Befestigungszapfen 40 mit endseitig angeordnetem Zentrierzapfen 42 vorgesehen.

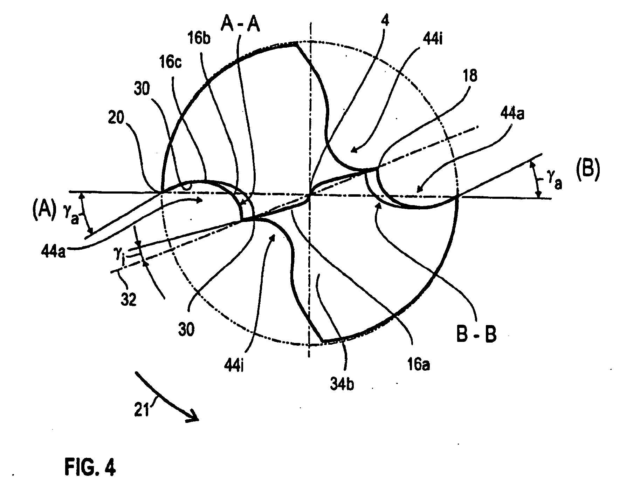

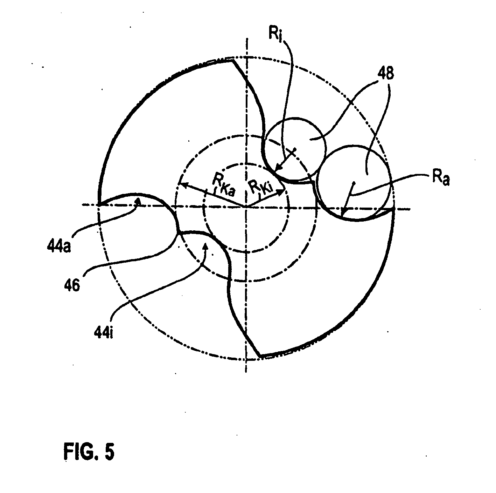

In Fig. 3B ist eine Übereinanderlagerung von mehreren Schnittansichten gemäß den Schnitten A-A, B-B, C-C gemäß den Schnittebenen der Fig. 3A dargestellt. Eine Aufsicht auf die Bohrerspitze 10 gemäß Fig. 3A.ist in Fig. 4 dargestellt, aus der der Schneidenverlauf gut zu entnehmen ist. Schließlich ist in Fig. 5 eine weitere Schnittdarstellung dargestellt, anhand derer weitere Merkmale erläutert werden.

Wie anhand von Fig. 4 zu erkennen ist, verläuft auch bei dieser Ausführungsvariante ausgehend von der Bohrermittenachse 4 der innere aktive Schneidabschnitt 16a, der sich bis zum inneren Schneideck 18 erstreckt. An dieses schließt sich der mittlere, inaktive Schneidabschnitt 16b an, welcher stetig und kantenfrei in den äußeren aktiven Schneidabschnitt 16c übergeht, welcher am Außenumfang des Bohrers am äußeren Schneideck 20 endet.

Wie aus den Fig. 3B, 4 und 5 sehr gut zu erkennen ist, sind in den freien Raum zwischen dem äußeren Schneideck 20 und dem in Drehrichtung 21 vorlaufenden Hauptfreiflächenbereich 34b zwei Teilspannuten, nämlich eine äußere Teilspannut 44a und eine innere Teilspannut 44i ausgebildet. Die beiden Teilspannuten 44a,i sind durch einen Trennsteg 46 voneinander getrennt, welcher am inneren Schneideck 18 beginnt und sich in Längsrichtung insbesondere wendelartig erstreckt. Der Trennsteg 46 ist vorzugsweise gerundet oder mit einer Fase versehen.

Die äußere Teilspannut 44a ist dem äußeren aktiven Schneidabschnitt 16c zugeordnet und beginnt unmittelbar anschließend am Schneidabschnitt 16c. Die innere Teilspannut 44i ist dem inneren Schneidabschnitt 16a zugeordnet. Aufgrund der erforderlichen Ausspitzung zur Ausbildung des inneren Schneidabschnitts 16a beginnt die innere Teilspannut 44i in Axialrichtung etwas beabstandet von dem inneren Schneidabschnitt 16a im zentrumsnahen Endbereich des vorlaufenden Hauptfreiflächenbereichs 34b.

Zur Ausbildung der beiden Teilspannuten 44a,44i sind zwei separate Schleifprozesse vorgesehen, wobei in jedem Schleifprozess eine der beiden Teilspannuten 44a,44i ausgebildet wird. Im Unterschied hierzu wird bei der Ausführungsvariante der Fig. 1 lediglich ein Schleifvorgang zur Ausbildung der dort dargestellten Spannut 12 vorgesehen, bevor üblicherweise anschließend durch einen zusätzlichen Schleifvorgang die sichelförmige Ausgestaltung und damit Ausbildung der Schneidabschnitte 16b,16c erzielt wird.

Wie insbesondere in Fig. 5 deutlich zu erkennen ist, verläuft der Nutgrund der beiden Teilspannuten 44a,i bogenförmig und insbesondere in etwa entlang einer Kreisbogenlinie. Der Bereich mit dem geringsten Krümmungsradius der jeweiligen Teilspannut 44a,i definiert jeweils einen Spanformradius, nämlich einen inneren Spanformradius Rᵢ sowie einen äußeren Spanformradius Rₐ. Der innere Spanformradius Rᵢ ist hierbei kleiner als der äußere Spanformradius Rₐ. Die Spanformradien definieren hierbei zugleich Spanräume 48, die durch die in Fig. 5 eingezeichneten Kreise dargestellt sind. Die Teilspannuten 44a,i sind nunmehr derart angeordnet und ausgebildet, dass die durch sie definierten Spanräume 48 sich nicht überschneiden, sondern allenfalls - wie in Fig. 5 - berühren.

Beim Zerspanungsvorgang wird durch den äußeren Schneidabschnitt 16c ein äußeren Teilspan gebildet, welcher in die äußeren Teilspannut 44a abläuft, dort entsprechend dem Spanformradius Rₐ zu einem langspanigen, wendelförmigen äußeren Teilspan geformt wird. Entsprechend wird auch ein innerer Teilspan in der inneren Teilspannut 44i ausgebildet. Durch die räumliche Trennung der beiden Teilspannuten 44a,i und der durch sie definierten Spanräume 48 ist gewährleistet, dass die beiden Teilspäne nebeneinander ausgebildet werden und nicht ineinander verlaufen. Dadurch ist eine zuverlässige und sichere Spanabfuhr der beiden Teilspäne gewährleistet.

Neben den unterschiedlichen Spanformradien Rᵢ, Rₐ sind die so genannten Kemradien ebenfalls unterschiedlich, wie aus Fig. 5 hervorgeht. Die Kemradien sind hierbei bestimmt durch den Abstand von der Bohrermittenachse 4 zu der jeweiligen Teilspannut 44a,i. So ist durch die äußere Teilspannut 44a ein äußerer Kemradius R_{Ka} und durch die innere Teilspannut ein innerer Kemradius R_{Ki} definiert. Der innere Kernradius R_{Ki} ist hierbei kleiner als der äußere Kemradius R_{Ka}.

Die beiden Teilspannuten 44a,44i unterscheiden sich weiterhin im Hinblick auf ihren jeweiligen Nebenspanwinkel, nämlich den äußeren Nebenspanwinkel γₐ und dem inneren Nebenspanwinkel γᵢ, wie aus Fig. 4 zu entnehmen ist. Der äußere Nebenspanwinkel γₐ entspricht hierbei dem Nebenspanwinkel γ wie er zu Fig. 1 erläutert wurde. Der innere Nebenspanwinkel γᵢ ist gebildet durch den Winkel zwischen der Radialen 32, die durch das innere Schneideck 18 verläuft, und der Nutwand 30 der inneren Teilspannut 44i am inneren Schneideck 18. Im Unterschied zu dem äußeren Nebenspanwinkel γₐ welcher als ein spitzer, so genannter positiver Nebenspanwinkel ausgebildet ist, ist der innere Nebenspanwinkel γᵢ als ein stumpfer, so genannter negativer Nebenspanwinkel ausgebildet. Auch betragsmäßig ist der innere Nebenspanwinkel γᵢ kleiner als der äußere Nebenspanwinkel γₐ und ist betragsmäßig etwa nur halb so groß wie der äußere Nebenspanwinkel γₐ.

Neben der unterschiedlichen Ausgestaltung der beiden Teilspannuten 44a,i innerhalb einer jeweiligen Schnittebene ist für eine zuverlässige Spanabfuhr zusätzlich vorgesehen, dass sich die Teilspannuten 44a,i in Längsrichtung unterschiedlich verändern. Dies wird insbesondere anhand der Fig. 3B sowie der Fig. 4 ersichtlich.

Der äußere Kemradius R_{Ka} verringert sich in Längsrichtung kontinuierlich, wie anhand der unterschiedlichen Verläufe der Spannutwand 30 der äußeren Spannut 44a entsprechend den Schnittebenen A-A, B-B, C-C in der Fig. 3B zu erkennen ist. Gleichzeitig bleibt der innere Kemradius R_{Ki} konstant oder nimmt sogar etwas zu. Durch diese Maßnahme verläuft die Spannutwand 30 der inneren Teilspannut 44i parallel zur Bohrermittenachse 4, wohingegen die Spannutwand 30 der äußeren Teilspannut 44a auf die Bohrermittenachse zugezogen ist, so dass der Freiraum für den Span vergrößert wird.

Parallel hierzu verringert sich auch mit zunehmendem Abstand von den Schneidabschnitten 16a-c der äußere Nebenspanwinkel γ_{a,} wie aus der Fig. 4 zu entnehmen ist. Auf der linken Bildhälfte ist hierbei der äußere Nebenspanwinkel γₐ in Höhe der Schnittebene A-A und auf der rechten Bildseite der Nebenspanwinkel γₐ auf Höhe der Schnittebene B-B dargestellt. Zur Kennzeichnung der Schnittebenen ist in den Figuren hinter den Bezugszeichen für den äußeren Nebenspanwinkel γₐ in Klammern jeweils noch ein A bzw. ein B für die jeweilige Schnittebene gesetzt.

Ein weiteres Unterscheidungsmerkmal ist schließlich aus Fig. 6 zu entnehmen, in der durch Pfeile eine äußere Transportrichtung Tₐ für den äußeren Teilspan und eine innere Transportrichtung Tᵢ für den inneren Teilspan angezeigt sind. Die Transportrichtungen T_{a,i} werden hierbei definiert durch den jeweiligen zugeordneten Drallwinkel δᵢ,δₐ (innerer Drallwinkel δᵢ äußerer Drallwinkel δₐ). Wie aus Fig. 6 zu entnehmen ist, ist hier der innere Drallwinkel δᵢ deutlich kleiner als der äußere Drallwinkel δₐ , so dass die innere Transportrichtung Tᵢ deutlich steiler und mehr parallel zur Bohrermittenachse 4 verläuft als die äußere Transportrichtung Tₐ.

Die beiden durch die Trennkante 46 voneinander getrennten Teilspannuten 44a,44i münden in die gemeinsame Spannut 12 im Bohrerkörper 8 und werden daher im Bohrerkörper 8 innerhalb der gemeinsamen Spannut 12 weiter abgeleitet.

Insgesamt ist durch die Anordnung der beiden getrennten Teilspannuten 44a,i, insbesondere durch deren unterschiedliche Ausgestaltung und durch deren unterschiedlichen Verlauf in Bohrerlängsrichtung eine zuverlässige, separierte Spanabfuhr des äußeren Teilspans und des inneren Teilspans gewährleistet.

## Patentansprüche

1. Bohrerspitze (10) für ein Bohrwerkzeug (2), die sich entlang einer Bohrermittenachse (4) in Bohrerlängsrichtung erstreckt und die eine sich nach außen erstreckende durchgehende Schneide aufweist, wobei die Schneide einen zur Bohrermittenachse (4) orientierten zentrumsnahen aktiven Schneidabschnitt (16a), einen radial außen liegenden zentrumsfernen aktiven Schneidabschnitt (16c) sowie zwischen den aktiven Schneidabschnitten (16a,c) einen inaktiven Schneidabschnitt (16b) aufweist, wobei der zentrumsnahe aktive Schneidabschnitt (16a) und der inaktive Schneidabschnitt (16b) an einem inneren Schneideck (18) aneinander angrenzen und der Abstand (R1) des Schneidecks (18) zu der Bohrermittenachse größergleich dem Kernradius (R4) eines Bohrerkerns (23) ist,
**dadurch gekennzeichnet,**
**dass** die Schneidabschnitte (16a,b,c) ohne axialen Versatz in einer gemeinsamen Stirnfläche der Bohrerspitze (10) liegen, und dass der inaktive Schneidabschnitt (16b) ausgehend vom Schneideck (18) einen gekrümmten Verlauf aufweist, derart dass er eine in radialer Richtung gegenüber dem Schneideck (18) zurückgesetzte Hohlkehle zwischen dem inneren Schneideck (18) und einem Anfangspunkt (19) des zentrumsfernen Schneidabschnitts (16c) bildet und im weiteren Verlauf knickfrei in den zentrumsfernen aktiven Schneidabschnitt (16c) übergeht dass der inaktive Schneidabschnitt (16b) und der zentrumsferne aktive Schneidabschnitt (16c) einen sichelförmigen Verlauf aufweisen, dass der inaktive Schneidabschnitt (16b) und der zentrumsferne aktive Schneidabschnitt (16c) homogen und kantenfrei entlang einer gekrümmten Linie ineinander übergehen und derart gekrümmt sind, dass eine sich in Bohrerlängsrichtung anschließende Spannutwand (30) - in einem Schnitt senkrecht zur Bohrermittenachse (4) gesehen - entlang einer Kreisbogenlinie mit einem Spanformradius (R3) verläuft, wobei die Hohlkehle vom Schneideck (18) bis zum Anfangspunkt (19) - in Aufsicht betrachtet - entlang der Kreisbogenlinie verläuft.

2. Bohrerspitze (10) nach Anspruch 1,
**dadurch gekennzeichnet,**
**dass** der zentrumsnahe aktive Schneidabschnitt (16a) und der inaktive Schneidabschnitt (16b) einen Schneidenwinkel (α) ≤ etwa 90° zwischen sich einschließen.

3. Bohrerspitze (10) nach Anspruch 1,
**dadurch gekennzeichnet,**
**dass** der Spanformradius (R3) derart bemessen ist, dass der durch den Spanformradius (R3) defnierte Kreis - in einer Ebene senkrecht zur Bohrermittenachse (4) - innerhalb eines Freiraums liegt, der begrenzt ist durch die Schneide (16a,b,c) und einen einen Bohrerumfang definierenden Außenkreis (24).

4. Bohrerspitze (10) nach einem der vorhergehenden Ansprüche,
**dadurch gekennzeichnet,**
**dass** der zentrumsferne Schneidabschnitt (16c) an einem äußeren Schneideck (20) endet, an das sich eine in Bohrerlängsrichtung verlaufende Nebenschneide (14) anschließt, wobei - in einem Schnitt senkrecht zur Bohrermittenachse (4) gesehen - eine Spannutwand (30) im Bereich der Nebenschneide (14) zu einer sich in Radialrichtung erstreckenden Radialen (32) einen Nebenspanwinkel (γ) einschließt, der größer als 20° ist.

5. Bohrerspitze (10) nach einem der vorhergehenden Ansprüche,
**dadurch gekennzeichnet,**
**dass** der zentrumsnahe aktive Schneidabschnitt (16a) winklig zur Spannut (12) orientiert ist und die beiden weiteren Schneidabschnitte (16b,c) Kanten der Spannut (12) bilden.

6. Bohrerspitze (10) nach einem der vorhergehenden Ansprüche,
**dadurch gekennzeichnet,**
**dass** der Abstand (R1) des inneren Schneidecks (18) zur Bohrermittenachse (4) etwa dem Kernradius des Bohrerkerns (23) entspricht.

7. Bohrerspitze (10) nach einem der vorhergehenden Ansprüche,
**dadurch gekennzeichnet,**
**dass** sich die gesamte aktive radiale Schneidenlänge zu etwa 2/3 auf den zentrumsfernen Schneidabschnitt (16c) und zu etwa 1/3 auf den zentrumsnahen Schneidabschnitt (16a) aufteilt.

8. Bohrerspitze (10) nach einem der vorhergehenden Ansprüche,
**dadurch gekennzeichnet,**
**dass** dem inneren aktiven Schneidabschnitt (16a) eine innere Teilspannut (44i) und dem äußeren aktiven Schneidabschnitt (16c) eine von der inneren Teilspannut (44i) getrennte äußere Teilspannut (44a) zur Spanabfuhr zugeordnet ist.

9. Bohrerspitze (10) nach Anspruch 8,
**dadurch gekennzeichnet,**
**dass** ein innerer Kernradius (R_{Ki}), gebildet durch den radialen Abstand zwischen der Bohrermittenachse (4) und der inneren Teilspannut (44i), geringer ist als ein äußerer Kernradius (R_{Ka}), gebildet durch den radialen Abstand zwischen der Bohrermittenachse (4) und der äußeren Teilspannut (44a).

10. Bohrerspitze (10) nach Anspruch 9,
**dadurch gekennzeichnet,**
**dass** sich der innere und der äußere Kernradius (R_{Ki},R_{Ka}) in Bohrerlängsrichtung unterschiedlich verändern.

11. Bohrerspitze (10) nach Anspruch 9 oder 10,
**dadurch gekennzeichnet,**
**dass** der äußere Kernradius (R_{Ka}) in Bohrerlängsrichtung abnimmt.

12. Bohrerspitze (10) nach einem der Ansprüche 9 bis 11,
**dadurch gekennzeichnet,**
**dass** der innere Kernradius (R_{Ki}) in Bohrerlängsrichtung zumindest konstant bleibt.

13. Bohrerspitze (10) nach einem der Ansprüche 8 bis 12,
**dadurch gekennzeichnet,**
**dass** die beiden Teilspannuten (44a,i) unterschiedliche Drallwinkel (δₐ, δᵢ) aufweisen, und insbesondere die äußere Teilspannut (44a) einen größeren Drallwinkel (δₐ) aufweist als die innere Teilspannut (44i).

14. Bohrerspitze (10) nach einem der Ansprüche 10 bis 13,
**dadurch gekennzeichnet,**
**dass** die innere Teilspannut (44i) einen geringeren Spanformradius (Rᵢ) aufweist als die äußere Teilspannut (44a).

15. Bohrerspitze (10) nach einem der Ansprüche 10 bis 14,
**dadurch gekennzeichnet,**
**dass** zwischen einer durch ein äußeres Schneideck (20) verlaufenden Radialen (32) und einer Spannutwand (30) der äußeren Teilspannut (46a) ein äußerer Nebenspanwinkel (γₐ) und zwischen einer durch das innere Schneideck (18) verlaufenden Radialen (32) und einer Spannutwand (30) der inneren Teilspannut (44i) ein innerer Nebenspanwinkel (γᵢ) gebildet sind, wobei sich die Nebenspanwinkel (γₐ, γᵢ) voneinander unterscheiden und insbesondere der innere Nebenspanwinkel (γᵢ) betragsmäßig kleiner ist als der äußere Nebenspanwinkel (γₐ).

16. Bohrerspitze (10) nach Anspruch 15,
**dadurch gekennzeichnet,**
**dass** der äußere Nebenspanwinkel (γₐ) ein positiver und der innere Nebenspanwinkel (γᵢ) ein negativer Nebenspanwinkel ist.

17. Bohrerspitze (10) nach Anspruch 15 oder 16,
**dadurch gekennzeichnet,**
**dass** der äußere Nebenspanwinkel (γₐ) in Bohrerlängsrichtung kleiner wird.

18. Bohrerspitze (10) nach einem der Ansprüche 8 bis 15,
**dadurch gekennzeichnet,**
**dass** die beiden Teilspannuten (44a,i) in Bohrerlängsrichtung beabstandet von den Schneidabschnitten (16a,c) in eine gemeinsame Spannut (12) zusammenlaufen.

19. Bohrerspitze (10) nach einem der Ansprüche 8 bis 18,
**dadurch gekennzeichnet,**
**dass** die radiale Länge des inneren aktiven Schneidabschnitts (16a) bis zu 2/3 der gesamten aktiven radialen Schneidenlänge beträgt.

## Claims

1. Bit (10) for a drill tool (2) extending along a drill centre axis (4) in the drill longitudinal direction and having an outwardly extending continuous cutting edge, the cutting edge having an active cutting portion (16a) which is oriented toward the drill centre axis (4) and is close to the centre, a radially outer active cutting portion (16c) which is remote from the centre and also, between the active cutting portions (16a, c), an inactive cutting portion (16b), the active cutting portion (16a) which is close to the centre and the inactive cutting portion (16b) bordering each other at an inner cutting corner (18) and the distance (R1) of the cutting corner (18) from the drill centre axis being equal to or greater than the core radius (R4) of a drill core (23),
**characterized in that**
the cutting portions (16a, b, c) lie in a common end face of the bit (10) without axial offset, and **in that** the inactive cutting edge portion (16b) has a curved course starting from the cutting corner (18), such that the curved course forms a flute set back in a radial direction compared to the cutting corner (18) between the inner cutting corner (18) and a starting point (19) of the cutting portion (16c) remote from the centre and subsequently merges without kinks into the active cutting portion (16c) remote from the centre, **in that** the inactive cutting portion (16b) and the active cutting portion (16c) which is remote from the centre have a crescent-shaped course **in that** the inactive cutting portion (16b) and the active cutting portion (16c) which is remote from the centre merge into each other homogeneously and in a rim-free manner along a curved line and are curved such an adjoining chip groove wall (30) in the drill longitudinal direction runs - viewed in a section perpendicular to the drill centre axis (4) - along a circular arc line having a chip shape radius (R3), the flute running - viewed from the top - along the circular arc line from the cutting corner (18) to the starting point (19).

2. Bit (10) according to Claim 1, **characterized in that** the active cutting portion (16a) which is close to the centre and the inactive cutting portion (16b) enclose between them a cutting angle (a) of about ≤ 90°.

3. Bit (10) according to Claim 1, **characterized in that** the dimensions of the chip shape radius (R3) are such that the circle defined by the chip shape radius (R3) lies - in a plane perpendicular to the drill centre axis (4) - within a free space which is delimited by the cutting edge (16a, b, c) and an outer circle (24) defining a drill circumference.

4. Bit (10) according to one of the preceding claims, **characterized in that** the cutting portion (16c) which is remote from the centre ends at an outer cutting corner (20) which is adjoined by a secondary cutting edge (14) running in the drill longitudinal direction, wherein - viewed in a section perpendicular to the drill centre axis (4) - a chip groove wall (30) encloses in the region of the secondary cutting edge (14), relative to a radial (32) extending in the radial direction, a secondary chip angle (γ) which is greater than 20°.

5. Bit (10) according to one of the preceding claims, **characterized in that** the active cutting portion (16a) which is close to the centre is oriented at an angle to the chip groove (12) and the two further cutting portions (16b, c) form rims of the chip groove (12).

6. Bit (10) according to one of the preceding claims, **characterized in that** the distance (R1) of the inner cutting corner (18) from the drill centre axis (4) corresponds substantially to the core radius of the drill core (23).

7. Bit (10) according to one of the preceding claims, **characterized in that** the total active radial cutting length is divided into roughly 2/3 on the cutting portion (16c) which is remote from the centre and into roughly 1/3 on the cutting portion (16a) which is close to the centre.

8. Bit (10) according to one of the preceding claims, **characterized in that** an inner partial chip groove (44i) is associated with the inner active cutting portion (16a) and an outer partial chip groove (44a), which is separated from the inner partial chip groove (44i), is associated with the outer active cutting portion (16c) for the removal of chips.

9. Bit (10) according to Claim 8, **characterized in that** an inner core radius (Rₖᵢ), formed by the radial distance between the drill centre axis (4) and the inner partial chip groove (44i), is smaller than an outer core radius (R_{Ka}), formed by the radial distance between the drill centre axis (4) and the outer partial chip groove (44a).

10. Bit (10) according to Claim 9, **characterized in that** the inner and the outer core radius (R_{Ki}, R_{Ka}) vary differently in the drill longitudinal direction.

11. Bit (10) according to Claim 9 or 10, **characterized in that** the outer core radius (R_{Ka}) decreases in the drill longitudinal direction.

12. Bit (10) according to one of Claims 9 to 11, **characterized in that** the inner core radius (R_{Ki}) remains at least constant in the drill longitudinal direction.

13. Bit (10) according to one of Claims 8 to 12, **characterized in that** the two partial chip grooves (44a, i) have different angles of twist (δₐ, δᵢ), and in particular the outer partial chip groove (44a) has a larger angle of twist (δₐ) than the inner partial chip groove (44i).

14. Bit (10) according to one of Claims 10 to 13, **characterized in that** the inner partial chip groove (44i) has a smaller chip shape radius (Rᵢ) than the outer partial chip groove (44a).

15. Bit (10) according to one of Claims 10 to 14, **characterized in that** an outer secondary chip angle (γₐ) is formed between a radial (32) running through an outer cutting corner (20) and a chip groove wall (30) of the outer partial chip groove (44a) and an inner secondary chip angle (γᵢ) is formed between a radial (32) running through the inner cutting corner (18) and a chip groove wall (30) of the inner partial chip groove (44i), wherein the secondary chip angles (γₐ, γᵢ) differ from each other and in particular the inner secondary chip angle (γᵢ) is smaller in terms of amount than the outer secondary chip angle (γₐ).

16. Bit (10) according to Claim 15, **characterized in that** the outer secondary chip angle (γₐ) is a positive secondary chip angle and the inner secondary chip angle (γᵢ) is a negative secondary chip angle.

17. Bit (10) according to Claim 15 or 16, **characterized in that** the outer secondary chip angle (γₐ) becomes smaller in the drill longitudinal direction.

18. Bit (10) according to one of Claims 8 to 15, **characterized in that** the two partial chip grooves (44a, i) converge in the drill longitudinal direction, set apart from the cutting portions (16a, c), into a common chip groove (12).

19. Bit (10) according to one of Claims 8 to 18, **characterized in that** the radial length of the inner active cutting portion (16a) is up to 2/3 of the total active radial cutting length.

## Revendications

1. Pointe de foret (10) pour un outil de perçage (2) qui s'étend le long d'un axe médian de foret (4) dans la direction longitudinale du foret et qui présente un tranchant continu s'étendant vers l'extérieur, le tranchant présentant une portion coupante active (16a) proche du centre orientée vers l'axe médian du foret (4), une portion coupante active (16c) éloignée du centre située radialement à l'extérieur ainsi qu'une portion coupante inactive (16b) entre les portions coupantes actives (16a,c), la portion coupante active (16a) proche du centre et la portion coupante inactive (16b) étant adjacentes l'une à l'autre au niveau d'un coin de coupe interne (18) et la distance (R1) du coin de coupe (18) à l'axe médian du foret étant supérieure ou égale au rayon du noyau (R4) d'un noyau du foret (23),
**caractérisée en ce que** les portions coupantes (16a,b,c) se trouvent, sans décalage axial, dans une surface frontale commune de la pointe de foret (10), et **en ce que** la portion coupante inactive (16b) présente à partir du coin de coupe (18) une allure courbe, de telle sorte qu'elle forme une goulotte en retrait dans la direction radiale par rapport au coin de coupe (18) entre le coin de coupe interne (18) et un point de départ (19) de la portion coupante (16c) éloignée du centre et qu'elle se prolonge dans son étendue suivante sans inflexion dans la portion coupante active (16c) éloignée du centre,
**en ce que** la portion coupante inactive (16b) et la portion coupante active (16c) éloignée du centre présentent une allure en forme de croissant,
**en ce que** la portion coupante inactive (16b) et la portion coupante active (16c) éloignée du centre se prolongent l'une dans l'autre de manière homogène et sans arête le long d'une ligne courbe et sont courbées de telle sorte qu'une paroi de goujure (30) se raccordant dans la direction longitudinale du foret, vue en coupe perpendiculairement à l'axe médian du foret (4), s'étende le long d'une courbe en arc de cercle ayant un rayon de formation de copeaux (R3), la goulotte s'étendant, vu de dessus, le long de la courbe en arc de cercle à partir du coin de coupe (18) jusqu'au point de départ (19).

2. Pointe de foret (10) selon la revendication 1,
**caractérisée en ce que**
la portion coupante active (16a) proche du centre et la portion coupante inactive (16b) forment entre elles un angle de coupe (α) ≤ à environ 90°.

3. Pointe de foret (10) selon la revendication 1,
**caractérisée en ce que**
le rayon de formation de copeaux (R3) est dimensionné de telle sorte que le cercle défini par le rayon de formation de copeaux (R3) - dans un plan perpendiculaire à l'axe médian du foret (4) - se situe à l'intérieur d'un espace libre qui est limité par les tranchants (16a,b,c) et un cercle extérieur (24) définissant une circonférence du foret.

4. Pointe de foret (10) selon l'une quelconque des revendications précédentes,
**caractérisée en ce que**
la portion coupante (16c) éloignée du centre se termine au niveau d'un coin de coupe externe (20), auquel se raccorde un tranchant secondaire (14) s'étendant dans la direction longitudinale du foret, une paroi de goujure (30), vue en coupe perpendiculairement à l'axe médian du foret (4), formant dans la région du tranchant secondaire (14) avec une radiale (32) s'étendant dans la direction radiale, un angle de coupe secondaire (γ) qui est supérieur à 20°.

5. Pointe de foret (10) selon l'une quelconque des revendications précédentes,
**caractérisée en ce que**
la portion coupante active (16a) proche du centre est orientée suivant un certain angle par rapport à la goujure (12) et les deux autres portions coupantes (16b,c) forment des arêtes de la goujure (12).

6. Pointe de foret (10) selon l'une quelconque des revendications précédentes,
**caractérisée en ce que**
la distance (R1) du coin de coupe interne (18) à l'axe médian du foret (4) correspond approximativement au rayon de noyau du noyau du foret (23).

7. Pointe de foret (10) selon l'une quelconque des revendications précédentes,
**caractérisée en ce que**
la longueur radiale active totale des tranchants est constituée approximativement pour 2/3 de la portion coupante (16c) éloignée du centre et pour 1/3 de la portion coupante (16a) proche du centre.

8. Pointe de foret (10) selon l'une quelconque des revendications précédentes,
**caractérisée en ce que**
la portion coupante active (16a) interne est associée à une goujure partielle interne (44i) et la portion coupante active externe (16c) est associée à une goujure partielle externe (44a) séparée de la goujure partielle interne (441) en vue de l'évacuation des copeaux.

9. Pointe de foret (10) selon la revendication 8,
**caractérisée en ce**
**qu'**un rayon de noyau interne (R_{Ki}), formé par la distance radiale entre l'axe médian du foret (4) et la goujure partielle (44i), est plus petit qu'un rayon de noyau externe (R_{Ka}), formé par la distance radiale entre l'axe médian du foret (4) et la goujure partielle externe (44a).

10. Pointe de foret (10) selon la revendication 9,
**caractérisée en ce que**
les rayons de noyau interne et externe (R_{Ki}, R_{Ka}) varient différemment dans la direction longitudinale du foret.

11. Pointe de foret (10) selon la revendication 9 ou 10,
**caractérisée en ce que**
le rayon de noyau externe (R_{Ka}) diminue dans la direction longitudinale du foret.

12. Pointe de foret (10) selon l'une quelconque des revendications 9 à 11,
**caractérisée en ce que**
le rayon de noyau interne (R_{Ki}) reste au moins constant dans la direction longitudinale du foret.

13. Pointe de foret (10) selon l'une quelconque des revendications 8 à 12,
**caractérisée en ce que**
les deux goujures partielles (44_{a,i}) présentent des angles de rotation différents (δₐ, δᵢ) et en particulier la goujure partielle externe (44a) présente un plus grand angle de rotation (δₐ) que la goujure partielle interne (44i).

14. Pointe de foret (10) selon l'une quelconque des revendications 10 à 13,
**caractérisée en ce que**
la goujure partielle interne (44i) présente un rayon de formation de copeaux (Rᵢ) plus petit que la goujure partielle externe (44a).

15. Pointe de foret (10) selon l'une quelconque des revendications 10 à 14,
**caractérisée en ce**
**qu'**entre une radiale (32) s'étendant à travers un coin de coupe extérieur (20) et une paroi de goujure (30) de la goujure partielle externe (44a) est formé un angle de coupe secondaire extérieur (γₐ) et entre une radiale (32) s'étendant à travers le coin de coupe interne (18) et une paroi de goujure (30) de la goujure partielle interne (44i), est formé un angle de coupe secondaire intérieur (γᵢ), les angles de coupe secondaires (γₐ, γᵢ) étant différents l'un de l'autre et en particulier l'angle de coupe secondaire intérieur (γᵢ) étant nettement plus petit que l'angle de coupe secondaire extérieur (γₐ).

16. Pointe de foret (10) selon la revendication 15,
**caractérisée en ce que**
l'angle de coupe secondaire extérieur (γₐ) est un angle de coupe secondaire positif et l'angle de coupe secondaire intérieur (γᵢ) est un angle de coupe secondaire négatif.

17. Pointe de foret (10) selon la revendication 15 ou 16,
**caractérisée en ce que**
l'angle de coupe secondaire extérieur (γₐ) diminue dans la direction longitudinale du foret.

18. Pointe de foret (10) selon l'une quelconque des revendications 8 à 15,
**caractérisée en ce que**
les deux goujures partielles (44a,i) se prolongent l'une vers l'autre dans la direction longitudinale du
foret en s'éloignant des portions coupantes (16a,c) jusque dans une goujure commune (12).

19. Pointe de foret (10) selon l'une quelconque des revendications 8 à 18,
**caractérisée en ce que**
la longueur radiale de la portion coupante active interne (16a) vaut jusqu'à 2/3 de la longueur totale radiale active du tranchant.
